# EUROPEAN PATENT APPLICATION

(11) **EP 4 506 432 A1**
(43) Date of publication of application: **12.02.2025**
(21) Application number: 23784899.9
(22) Date of filing: 25.03.2023
(51) Int. Cl.: C09J 5/02, C09J 11/04, C09J 11/06, C09J 183/08, C08K 5/5415

(54) **GLASS ADHESIVE PRIMER COMPOSITION**

(30) Priority: 08.04.2022 KR 20220043757
(71) Applicant: KCC Corporation, Seoul 06608 (KR)
(72) Inventor: LEE, Jeonghyun, Ulsan 44262 (KR)
(74) Representative: Pfenning, Meinig & Partner mbB
(86) International application number: PCT/KR2023/003992
(87) International publication number: WO 2023/195671

(57) **Abstract**

The present disclosure relates to a primer composition for glass adhesives which does not use organic solvents such that it is environmentally friendly and can secure sufficient pot life, and to a primer composition for glass adhesives, comprising a mercapto silane-based oligomer; a nonionic surfactant; a zirconium-based catalyst; and a remainder of solvent comprising water, wherein the mercapto silane-based oligomer comprises one or more mercapto groups (-SH) and one or more hydroxy groups (-OH) within a molecule.

## Description

### TECHNICAL FIELD

The present invention relates to a primer composition for glass adhesives having excellent glass adhesion without using organic solvents.

### BACKGROUND ART

When glass is bonded to the painted surface of a car body by using an organic adhesive, the adhesion between the (organic) painted surface and (inorganic) glass, which are different materials from each other, was insufficient, causing the glass to be pushed or separated from the painted surface. Therefore, in order to prevent such problem, a primer was first applied to the glass, and a urethane-based adhesive was used on the primer to bond same to the painted surface. At this time, the urethane-based adhesive, which is a moisture-curing type that reacts with moisture in the air and hardens, may comprise a resin component such as a urethane resin, which is a reaction product of isocyanate and polyol, a pigment component such as carbon black and calcium carbonate, and a plasticizer such as diisononyl phthalate (DINP).

Meanwhile, the primer composition applied to improve the bonding strength between glass and an adhesive may comprise film forming agents such as epoxy resins, silane polymers and acrylic resins; and pigments such as carbon black; and additives such as inorganic fillers (e.g., titanium oxide, calcium carbide and silicic anhydride).

Korean Patent No. 1464791 (Issue Date: November 18, 2014) discloses a system for bonding glass to a structure. However, conventional primer compositions are applied by being dissolved or dispersed in an organic solvent. This is because most organic solvents have low vapor pressures and evaporate quickly after being applied to a substrate. However, such primer compositions require the organic solvent to evaporate and be removed before applying the adhesive. At this time, the organic solvent is volatilized and discharged into the environment, which may cause problems when exposed to human beings or create a risk of environmental pollution.

Therefore, research and development on a primer composition for glass adhesives which has excellent preservability without using organic solvents, has excellent workability by ensuring pot life, and has excellent adhesion to glass, are required.

### PRIOR ART CITATIONS

(Patent Document 1) Korean Patent No. 1464791 (Issue Date: November 18, 2014)

### SUMMARY OF INVENTION

### TECHNICAL PROBLEM

In one aspect, the object of the present invention is to provide a primer composition for glass adhesives which does not use organic solvents such that it is environmentally friendly and can secure sufficient pot life.

### SOLUTION TO PROBLEM

In one aspect, the present invention can provide a primer composition for glass adhesives, comprising a mercapto silane-based oligomer; a nonionic surfactant; a zirconium-based catalyst; and a remainder of solvent comprising water, wherein the mercapto silane-based oligomer comprises one or more mercapto groups (-SH) and one or more hydroxy groups (-OH) within a molecule.

### ADVANTAGEOUS EFFECTS OF INVENTION

The primer composition for glass adhesives according to the present invention does not use organic solvents such that it is eco-friendly, has excellent preservability, and can secure pot life such that it has excellent workability. In addition, the primer composition for glass adhesives of the present invention has excellent adhesion to glass to be suitable for fixing glass in automobiles.

### MODE FOR INVENTION

Hereinafter, the present invention will be described in detail.

Unless otherwise specified herein, the term "alkyl" refers to a straight or branched-chain saturated monovalent hydrocarbon chain, and "alkylene" refers to a straight or branched-chain saturated polyvalent hydrocarbon chain.

The primer composition for glass adhesives according to one aspect of the present invention may comprise a mercapto silane-based oligomer, a nonionic surfactant, a zirconium-based catalyst and a solvent, and the solvent may comprise water.

In the primer composition of the present invention, the mercapto silane-based oligomer serves to improve adhesion to glass and Direct Glazing Urethane (DGU), and the nonionic surfactant serves to improve the compatibility of a silane-based oligomer with water, which is a solvent, and the zirconium-based catalyst serves to improve the adhesion between a primer composition and glass.

Here, Direct Glazing Urethane (DGU) is a urethane-based adhesive, and, for example, is a moisture-curing urethane-based sealant for fixing automobile glass.

Generally, when a silane compound in the form of an oligomer has increased molecular weights, the condensation reaction rate decreases. However, the mercapto silane-based oligomer of the present invention is hydrolyzed and increases the bonding rate with the surface of glass due to the cyclodioxy structure contained in a molecule, thereby improving workability and adhesion to the glass surface in the process of forming a primer film.

In one embodiment, the mercapto silane-based oligomer of the present invention is a polymer formed by linking a plurality of siloxane bonds (Si-O bonds), and may comprise one or more mercapto groups (-SH) and one or more hydroxy groups (- OH).

In another embodiment, the mercapto silane-based oligomer of the present invention may further comprise one or more cyclodioxy structures.

The mercapto group and hydroxy group react with the NCO group contained in the DGU composition to improve adhesion and binding between an adhesive and a primer. Specifically, the mercapto group is hydrophobic and, thus, has excellent bonding properties with the DGU composition such that it has excellent water/chemical resistance in the process of forming a coating film, and the hydroxy group has hydrophilic properties to improve adhesion to glass.

In another embodiment, the mercapto silane-based oligomer of the present invention may comprise one or more compounds represented by the following formula 1:

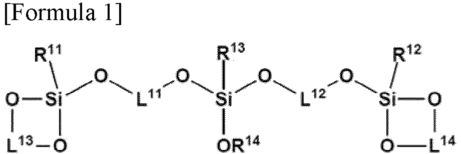

In formula 1,
R¹¹, R¹², and R¹³ each may be a straight-chain or branched-chain C₁₋₁₀ alkyl group substituted with a mercapto group,
L¹¹, L¹², L¹³, and L¹⁴ may be a straight-chain or branched-chain C₁₋₁₀ alkylene group, and
R¹⁴ may be a straight-chain or branched-chain C₁₋₁₀ alkyl group substituted with hydrogen or a hydroxy group.

In another embodiment, in formula 1,
R¹¹, R¹², and R¹³ each may be a straight-chain C₁₋₅ alkyl group whose terminal carbon is substituted with a mercapto group, or preferably an n-propyl group whose terminal carbon is substituted with a mercapto group,
L¹¹, L¹², L¹³, and L¹⁴ each may be a C₁₋₅ alkylene group substituted with a methyl group, or preferably a 2-methyl-propylene group, and
R¹⁴ may be a C₁₋₅ alkyl group whose terminal carbon is substituted with a hydroxy group, and the carbon adjacent to the terminal carbon is substituted with a methyl group, or preferably a 2-methyl-3-hydroxypropyl group.

In particular, in the mercapto silane-based oligomer of formula 1, the cyclodioxy structure comprising L¹³ or L¹⁴ may be hydrolyzed through reaction to form glycol, thereby improving the bonding speed with the surface of glass.

In the present invention, the mercapto silane-based oligomer may be contained in the primer composition for glass adhesives in an amount of 3 to 8% by weight, based on the total weight of the primer composition. If the content of the mercapto silane-based oligomer compound is less than the above-described range, there may be a problem of reduced adhesion and pot life adhesion, and, if it exceeds the above-described range, there may be a problem of reduced preservability.

In one embodiment, the nonionic surfactant of the present invention may comprise one or more compounds represented by the following formula 2:

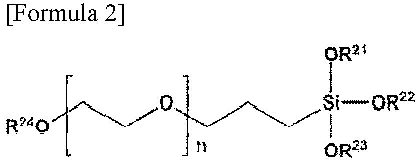

In formula 2,
R²¹, R²², R²³, and R²⁴ each may be a straight-chain or branched-chain C₁₋₁₀ alkyl group, and
n may be an integer from 2 to 50.

In another embodiment, in formula 2,
R²¹, R²², R²³, and R²⁴ each may be a methyl group, and
n may be an integer from 6 to 50, or from 6 to 9.

The nonionic surfactant of the present invention is a water-hydrolyzable silane coupling agent having a water-soluble oligomer length of 50 or less. Specifically, the nonionic surfactant of the present invention is a polyethylene oxide-based silane end-capped surfactant comprising an aliphatic hydrocarbon moiety between the polyalkylene oxide moiety and the silicon atom.

In the present invention, the nonionic surfactant may be contained in the primer composition for glass adhesives in an amount of 0.2 to 1% by weight, based on the total weight of the primer composition. If the content of the nonionic surfactant is less than the above-described range, there may be a problem of reduced preservability, and, if it exceeds the above-described range, there may be a problem of reduced preservability and pot life adhesion.

In one embodiment, the zirconium-based catalyst of the present invention may comprise one or more zirconium complex compounds represented by the following formula 3:

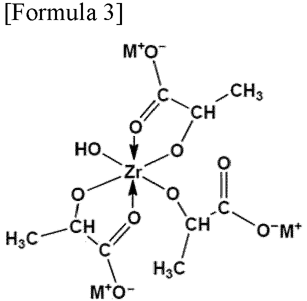

In formula 3, M may be a monovalent metal.

In another embodiment, in formula 3, M may be Na.

In the present invention, the zirconium-based catalyst may be contained in the primer composition for glass adhesives in an amount of 0.01 to 0.2% by weight, based on the total weight of the primer composition. If the content of the zirconium-based catalyst is less than or exceeds the above-described range, there may be a problem of reduced preservability and adhesion.

In one embodiment, the solvent of the present invention may consist of alcohol, purified water, and modified polysiloxane.

In another embodiment, the alcohol may be isopropyl alcohol, but the present invention is not limited thereto. The alcohol may be contained in the primer composition for glass adhesives in an amount of 45 to 55% by weight, or 50% by weight, based on the total weight of the primer composition.

In another embodiment, the purified water may be contained in the primer composition for glass adhesives in an amount of 40 to 50% by weight, or 41 to 47% by weight, based on the total weight of the primer composition.

In another embodiment, the modified polysiloxane may be a polyether-modified polysiloxane, and may be contained in the primer composition for glass adhesives in an amount of 0.02 to 0.08% by weight, or 0.05% by weight, based on the total weight of the primer composition.

In one embodiment, the primer composition for glass adhesives according to the present invention may not comprise a silane compound containing amino groups. The silane compound containing amino groups has excellent compatibility with water-soluble solvents, which may cause the problem that, when it is contained in a primer composition and form a primer film between the glass surface and the adhesive, it undergoes a reverse hydrolysis reaction in a water adhesion test for exposing same to water at 40°C and, thus, peels off.

In addition, the formation of a primer layer between an adhesive and a glass surface by using the primer for glass adhesives of the present invention in the process of bonding the glass to the painted surface of a car body by using an organic adhesive may cause a problem in that a reverse hydrolysis phenomenon occurs in a washer fluid, which is an automobile glass cleaning fluid, causing separation between the glass surface and the primer layer, such that the glass surface to detach from the painted surface of the car body.

Therefore, the primer composition for glass adhesives according to the present invention uses non-ionic surfactants and aqueous solvents without using organic solvents and, thus, is environmentally friendly, and does not comprise a silane compound containing amino groups and, thus, has excellent water/chemical resistant adhesion.

### Experimental Examples

The following experimental examples comprise examples according to the present invention and comparative examples for comparison, and are only for illustrating the present invention and are not intended to limit the scope of the present invention. Unless otherwise stated, all parts and percentages are by weight.

### Preparation of Primer Composition

A glass flask was equipped with a stirrer, condenser, and thermometer, and solvents (e.g., isopropyl alcohol and purified water), silane-based oligomers, and surfactants were added, and hydrolysis was performed for more than 10 minutes.

After hydrolysis was completed, modified polysiloxane and catalysts were added and stirred for more than 5 minutes to prepare a primer composition for glass adhesives.

The input content of each component is presented in Table 1 below.

**[Table 1]**

| Component | | Experimental Example 1 | Experimental Example 2 | Experimental Example 3 | Experimental Example 4 | Experimental Example 5 |
|---|---|---|---|---|---|---|
| Silane-based oligomer | Silane-based oligomer-1 | 5 | 3 | 8 | 5 | 5 |
| | Silane-based oligomer-2 | | | | | |
| | Silane-based oligomer-3 | | | | | |
| | Silane compound-1 | | | | | |
| | Silane compound-2 | | | | | |
| Surfactant | Surfactant-1 | 0.5 | 0.5 | 0.5 | 0.2 | 1.0 |
| | Surfactant-2 | | | | | |
| | Surfactant-3 | | | | | |
| Catalyst | Catalyst-1 | 0.1 | 0.1 | 0.1 | 0.1 | 0.1 |
| | Catalyst-2 | | | | | |
| Solvent | Isopropyl Alcohol (IPA) | 50 | 50 | 50 | 50 | 50 |
| | Purified water | 44.35 | 46.35 | 41.35 | 44.65 | 43.85 |
| | Surface conditioning agent | 0.05 | 0.05 | 0.05 | 0.05 | 0.05 |

**[Table 2]**

| Component (wt.%) | | Experimental Example 6 | Experimental Example 7 | Experimental Example 8 | Experimental Example 9 | Experimental Example 10 |
|---|---|---|---|---|---|---|
| Silane-based oligomer | Silane-based oligomer-1 | 10 | 2 | 5 | 5 | |
| | Silane-based oligomer-2 | | | | | |
| | Silane-based oligomer-3 | | | | | |
| | Silane compound-1 | | | | | 5 |
| | Silane compound-2 | | | | | |
| Surfactant | Surfactant-1 | 0.5 | 0.5 | 2 | 0.1 | 0.5 |
| | Surfactant-2 | | | | | |
| | Surfactant-3 | | | | | |
| Catalyst | Catalyst-1 | 0.1 | 0.1 | 0.1 | 0.1 | 0.1 |
| | Catalyst-2 | | | | | |
| Solvent | Isopropyl Alcohol (IPA) | 50 | 50 | 50 | 50 | 50 |
| | Purified water | 39.35 | 47.35 | 42.85 | 44.75 | 44.35 |
| | Surface conditioning agent | 0.05 | 0.05 | 0.05 | 0.05 | 0.05 |

**[Table 3]**

| Component (wt.%) | | Experimental Example 11 | Experimental Example 12 | Experimental Example 13 | Experimental Example 14 | Experimental Example 15 | Experimental Example 16 |
|---|---|---|---|---|---|---|---|
| Silane- | Silane-based | | | | 5 | 5 | 5 |
| based oligomer | oligomer-1 | | | | | | |
| | Silane-based oligomer-2 | 5 | | | | | |
| | Silane-based oligomer-3 | | 5 | | | | |
| | Silane compound-1 | | | | | | |
| | Silane compound-2 | | | 5 | | | |
| Surfactant | Surfactant-1 | 0.5 | 0.5 | 0.5 | | | 0.5 |
| | Surfactant-2 | | | | 0.5 | | |
| | Surfactant-3 | | | | | 0.5 | |
| Catalyst | Catalyst-1 | 0.1 | 0.1 | 0.1 | 0.1 | 0.1 | |
| | Catalyst-2 | | | | | | 0.1 |
| Solvent | Isopropyl Alcohol (IPA) | 50 | 50 | 50 | 50 | 50 | 50 |
| | Purified water | 44.35 | 44.35 | 44.35 | 44.35 | 44.35 | 44.35 |
| | Surface conditioning agent | 0.05 | 0.05 | 0.05 | 0.05 | 0.05 | 0.05 |

The compound name, chemical formula, or manufacturer and product name of each component used in the experimental examples is presented in Table 4 below.

**[Table 4]**

| Component | Detailed specification |
|---|---|
| Silane-based oligomer-1 | Mercapto silane-based oligomer containing three -SH groups and one -OH group within a molecule |
| | Mw : 369 |
| | Density: (25°C) 1.105 g/ml |
| | Viscosity: (25°C) 400 cPs |
| Silane-based oligomer-2 | Epoxy-based silane oligomer(epoxy functional silane oligomer) |
| | Density: (25°C) 1.166 g/cm³ |
| | Viscosity: (25°C) 43.55 cSt |
| Silane-based oligomer-3 | Isocyanate-based silane oligomer |
| | Tris(3-trimethoxysilylpropyl)isocyanurate |
| | Mw: 615.4 |
| | Density: (25°C) 1.17 |
| Silane compound-1 | Amino-based silane(Aqueous 3-aminopropylsilane hydrolysate) |
| | Density: (20 °C) 1.06 g/ml |
| | Viscosity: (20 °C) 3.7 cP |
| Silane compound-2 | Mercapto-based silane containing one -SH group within a molecule but no OH group |
| | Mw: 196.4 |
| | Density: (25°C): 1.06 |
| Surfactant-1 | Nonionic surfactant |
| | 3-[methoxy(polyethyleneoxy)6-9] propyltrimethoxysilane |
| Surfactant-2 | Cationic surfactant |
| | Stearyltrimethylammonium chloride |
| Surfactant-3 | Anionic surfactant |
| | Poly(oxy-1,2-ethanediyl), a-[1-(hydroxymethyl)-2-(2-propenyloxy)ethyl]-2-(2-propenyloxy)-w-hydroxy-,C11-rich C10-14branched alkyl ethers |
| | Cas No. 403983-53-9 |
| Catalyst-1 | Zirconium-based compound |
| | Zirconate(1-),tris(2-hydroxypropanoato -O1,O2)oxo-, sodium (9CI) |
| Catalyst-2 | Titanium-based compound |
| | Dihydroxybis(ammonium lactato)titanium(IV) |
| Surface conditioning agent | Polyethylene modified polysiloxane |
| | Viscosity: (23 °C) 35 mPa.s |
| | Mw : 197.22 g/ml |

### Evaluation of Physical Properties

Specimens were prepared by using the primer compositions prepared according to the experimental examples by a method based on the HMC standard (MS715-25), and the physical properties were measured by the method below. The results are shown in Tables 5 to 7 below.

### (1)Weather resistance

The compositions were applied to the glass surface with an application area of 25 mm (width) × 150 mm (length) × 3 mm (height), and left for 72 hours under conditions of 20°C and 65% relative humidity, and the specimens were exposed to XENON WEATHER-O-METER (WOM) for 1,000 hours. After the exposure, the specimens were taken out and left at 20°C for 1 hour. The primer layer at one end of each specimen was cut with a 15 mm knife, and the coating material was held with one hand and peeled off by using a knife at a 30° angle, followed by curing. Afterwards, adhesion was evaluated by calculating the percentage of the area of the adhesive that was not attached to the primer (the peeled interface between the primer layer and the adhesive), as compared to the total area of the adhesive layer. At this time, it was evaluated that the larger the attached area, the better the adhesion.
⊚: Excellent (cohesive failure of sealant layer of at least 90%)
○: Good (cohesive failure of the sealant layer of 80% to 90%)
△: Weak (cohesive failure of the sealant layer of 70 to 80%)
×: Poor (cohesive failure of the sealant layer of less than 70%)

At this time, the XENON test was performed under the conditions according to MS600-35.

### (2) Preservability

Preservability was evaluated by visually observing the sedimentation of carbon black in the primer compositions. Specifically, after the composition was left at 20°C for 1 week, if the film of the supernatant was black, it was evaluated as Excellent (⊚). After the composition was left at 20°C for 1 week, if the film of the supernatant was close to black, it was evaluated as Good (○). After the composition was left at 20°C for 1 week, if the film of the supernatant was gray, it was evaluated as Weak (△). After the composition was left at 20°C for 1 week, if the film of the supernatant was not black, it was evaluated as Poor (×).

### (3) Adhesion

The compositions were applied to glass with an application area of 120 mm (length) × 10 mm (width) × 5 mm (thickness), and a urethane sealant (Manufacturer: KCC, Product Name: PU9510(S-P2P)) and an adhesive (Manufacturer: KCC, Product Name: PU9370-BTX) were pressed thereon to prepare specimens. Thereafter, the specimens were cured for 7 days under conditions of 20°C and 65% relative humidity. Thereafter, the primer layer at one end of each specimen was cut with a 15 mm knife, and the coating material was held with one hand and peeled off by using a knife at a 30° angle, followed by curing. Thereafter, adhesion was evaluated by calculating the percentage of the area of the adhesive that was not attached to the primer (the peeled interface between the primer layer and the adhesive), as compared to the total area of the adhesive layer. At this time, it was evaluated that the larger the attached area, the better the adhesion.
⊚: Excellent (cohesive failure of the sealant layer of at least 90%)
○: Good (cohesive failure of sealant layer of 80% to 90%)
△: Weak (cohesive failure of the sealant layer of 70 to 80%)
×: Poor (cohesive failure of the sealant layer of less than 70%)

### (4) Pot life adhesion

The compositions were applied to glass with an application area of 120 mm (length) × 10 mm (width) × 5 mm (thickness), and left for 10 days under conditions of 20°C and 65% relative humidity, and a urethane sealant (Manufacturer: KCC, Product Name: PU9510(S-P2P)) and an adhesive (Manufacturer: KCC, Product Name: PU9370-BTX) were pressed thereon to prepare specimens.

The specimens were preserved under conditions of 20°C and 65% relative humidity. An adhesion test was performed 7 days after the adhesive was applied, and the state of the adhesive interface was observed. At this time, the adhesion test was carried out in the same manner as item (3). The evaluation criteria are as follows.
⊚: Excellent (cohesive failure of the sealant layer of at least 90%)
○: Good (cohesive failure of sealant layer of 80% to 90%)
△: Weak (cohesive failure of the sealant layer of 70 to 80%)
×: Poor (cohesive failure of the sealant layer of less than 70%)

### (5) Appearance

The primer compositions were wet with a brush, applied once to tempered glass and laminated glass, and left to stand, and the primers were visually evaluated in terms of the stains, uniformity, hiding properties, etc.
⊚: Excellent (Having no stains and good hiding properties)
○: Good (Having no stains and average hiding properties)
△: Weak (Having fine stains and weak hiding properties)
×: Poor (Having stains and poor hiding properties)

### (6) Chemical resistance

The compositions were applied to glass with an area of 120 mm (length) × 10 mm (width) × 5 mm (thickness), and a urethane sealant (Manufacturer: KCC, Product Name: PU9510(S-P2P)) and an adhesive (Manufacturer: KCC, Product Name: PU9370-BTX) were pressed thereon to prepare specimens. Thereafter, the specimens went through the following steps:
20°C±2°C * 72 hr → Immersed in WINDOW WASHER liquid/distilled water at the volume ratio of 1/1 (volume ratio) * 336 hr → 20°C±2C * 1 hr.

After they were cured, the primer layer at one end of each specimen was cut with a 15 mm knife, and the coating material was held with one hand and peeled off by using a knife at a 30° angle. Thereafter, adhesion was evaluated by calculating the percentage of the area of the adhesive that was not attached to the primer (the peeled interface between the primer layer and the adhesive), as compared to the total area of the adhesive layer. At this time, it was evaluated that the larger the attached area, the better the adhesion.
⊚: Excellent (cohesive failure of the sealant layer of at least 90%)
○: Good (cohesive failure of sealant layer of 80% to 90%)
△: Weak (cohesive failure of the sealant layer of 70 to 80%)
×: Poor (cohesive failure of the sealant layer of less than 70%)

### (7) Water resistant adhesion

The compositions were applied to glass in an area of 120 mm (length) × 10 mm (width) × 5 mm (thickness), and a urethane sealant (Manufacturer: KCC, Product Name: PU9510(S-P2P)) and an adhesive (Manufacturer: KCC, Product Name: PU9370-BTX) were pressed thereon to prepare specimens. Thereafter, the specimens went through the following steps:
20°C±2°C * 72 hr → 40°C±2°C water * 336 hr → 20°C±2°C * 1 hr.

After they were cured, the primer layer at one end of each specimen was cut with a 15 mm knife, and the coating material was held with one hand and peeled off by using a knife at a 30° angle. Thereafter, adhesion was evaluated by calculating the percentage of the area of the adhesive that was not attached to the primer (the peeled interface between the primer layer and the adhesive), as compared to the total area of the adhesive layer. At this time, it was evaluated that the larger the attached area, the better the adhesion.
⊚: Excellent (cohesive failure of the sealant layer of at least 90%)
○: Good (cohesive failure of sealant layer of 80% to 90%)
△: Weak (cohesive failure of the sealant layer of 70 to 80%)
×: Poor (cohesive failure of the sealant layer of less than 70%)

**[Table 5]**

| | Experimental Example 1 | Experimental Example 2 | Experimental Example 3 | Experimental Example 4 | Experimental Example 5 |
|---|---|---|---|---|---|
| Weather resistance | ⊚ | ⊚ | ⊚ | ⊚ | ⊚ |
| Preservability | ⊚ | ⊚ | ○ | ○ | ⊚ |
| Adhesion | ⊚ | ⊚ | ⊚ | ⊚ | ○ |
| Pot life adhesion | ⊚ | ○ | ⊚ | ⊚ | ⊚ |
| Appearance | ⊚ | ⊚ | ⊚ | ⊚ | ⊚ |
| Chemical resistance | ⊚ | ⊚ | ⊚ | ⊚ | ⊚ |
| Water resistant adhesion | ⊚ | ⊚ | ⊚ | ○ | ○ |

**[Table 6]**

| | Experimental Example 6 | Experimental Example 7 | Experimental Example 8 | Experimental Example 9 | Experimental Example 10 |
|---|---|---|---|---|---|
| Weather resistance | ⊚ | ○ | ⊚ | ⊚ | ○ |
| Preservability | × | ⊚ | × | × | ⊚ |
| Adhesion | ⊚ | △ | ⊚ | ⊚ | △ |
| Pot life adhesion | ⊚ | △ | △ | ⊚ | × |
| Appearance | △ | ⊚ | ○ | ○ | ○ |
| Chemical resistance | ⊚ | × | ○ | ○ | × |
| Water resistant adhesion | ⊚ | × | ○ | ○ | × |

**[Table 7]**

| | Experimental Example 11 | Experimental Example 12 | Experimental Example 13 | Experimental Example 14 | Experimental Example 15 | Experimental Example 16 |
|---|---|---|---|---|---|---|
| Weather resistance | ○ | ○ | ○ | ○ | ○ | ⊚ |
| Preservability | ⊚ | ⊚ | ⊚ | × | × | △ |
| Adhesion | △ | △ | △ | ○ | ○ | × |
| Pot life adhesion | × | × | × | ⊚ | ⊚ | ⊚ |
| Appearance | ⊚ | ⊚ | ⊚ | △ | △ | ⊚ |
| Chemical resistance | × | × | × | ○ | ○ | ○ |
| Water resistant adhesion | × | × | × | ○ | ○ | ○ |

As shown in Tables 5 to 7, the primer composition of Experimental Example 1 was Excellent (⊚) in weather resistance, preservability, adhesion, pot life adhesion, appearance, chemical resistance, and water resistant adhesion. The primer composition of Experimental Example 2 was Good (○) in pot life adhesion and Excellent (⊚) in all other physical properties. The primer composition of Experimental Example 3 was Good (○) in preservability and excellent (⊚) in all other physical properties. The primer composition of Experimental Example 4 was good (○) in preservability and water resistant adhesion and excellent (⊚) in all other physical properties. The primer composition of Experimental Example 5 was good (○) in adhesion and water resistant adhesion and excellent (⊚) in all other physical properties.

The primer composition of Experimental Example 6 was poor (×) in preservability. The primer composition of Experimental Example 7 was poor (×) in chemical resistance and water resistant adhesion. The primer compositions of Experimental Examples 8 and 9 were poor (×) in preservability. The primer compositions of Experimental Examples 10 to 13 were poor (×) in pot life adhesion, chemical resistance and water resistant adhesion. The primer compositions of Experimental Examples 14 and 15 were poor (X) in preservability. The primer composition of Experimental Example 16 was poor (X) in adhesion.

As a result of evaluation on the physical properties, the primer composition of Experimental Example 1 had the best physical properties, and the primer compositions of Experimental Examples 2 to 5 did not have poor (X) physical properties.

## Claims

1. A primer composition for glass adhesives, comprising a mercapto silane-based oligomer; a nonionic surfactant; a zirconium-based catalyst; and a remainder of solvent comprising water, wherein
the mercapto silane-based oligomer comprises one or more mercapto (-SH) groups and one or more hydroxy groups (-OH) within a molecule.

2. The primer composition for glass adhesives according to claim 1, wherein the mercapto silane-based oligomer further comprises one or more cyclodioxy structures within a molecule.

3. The primer composition for glass adhesives according to claim 1, wherein the mercapto silane-based oligomer comprises one or more compounds represented by the following formula 1: 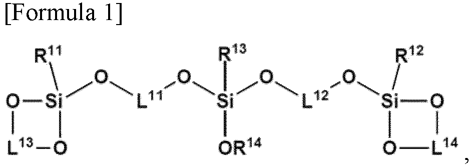
wherein R¹¹, R¹², and R¹³ are each a straight-chain or branched-chain C₁₋₁₀ alkyl group substituted with a mercapto group,
L¹¹, L¹², L¹³, and L¹⁴ are a straight-chain or branched-chain C₁₋₁₀ alkylene group, and
R¹⁴ are a straight-chain or branched-chain C₁₋₁₀ alkyl group substituted with hydrogen or a hydroxy group.

4. The primer composition for glass adhesives according to claim 1, wherein the nonionic surfactant comprise one or more compounds represented by the following formula 2: 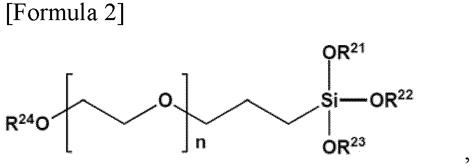
wherein R²¹, R²², R²³, and R²⁴ are each a C₁₋₅ alkyl group, and
n is an integer from 6 to 50.

5. The primer composition for glass adhesives according to claim 1, wherein the composition comprises 3 to 8% by weight of the mercapto silane-based oligomer; 0.2 to 1% by weight of the nonionic surfactant; 0.01 to 0.2% by weight of the zirconium-based catalyst; and the remainder of the solvent comprising water, based on the total weight of the primer composition.

6. The primer composition for glass adhesives according to claim 1, wherein the composition does not comprise a silane compound containing amino groups.
